# EUROPEAN PATENT APPLICATION

(11) **EP 1 439 478 A2**
(43) Date of publication of application: **21.07.2004**
(21) Application number: 03027462.5
(22) Date of filing: 01.12.2003
(51) Int. Cl.: G06F 17/60

(54) **Optimization of transport with multiple vehicles**

(30) Priority: 02.12.2002 US 308919
(71) Applicant: SAP Aktiengesellschaft, 69190 Walldorf (DE)
(72) Inventor: Eckert, Christoph, 76684 Östringen (DE); Gottlieb, Jens, 69120 Heidelberg (DE)
(74) Representative: Schneider, Günther M., Dr.-Ing.

(57) **Abstract**

Methods and apparatus, including computer program products, for optimizing a total cost associated with transporting products on a set of vehicles. Orders representing products are assigned to one or more vehicles in the set. The assignment defines a sequence of pickup and delivery activities for the vehicles. One or more orders are deleted from one or more vehicles; at least one order from the deleted orders is inserted into a vehicle; the assignment is changed for at least one vehicle; and a cost is determined for the transportation of the products on the set of vehicles. The steps of deleting one or more orders, inserting at least one order, changing the assignment, and determining a cost, are repeated until an optimal cost has been determined.

## Description

### BACKGROUND

The present invention relates to organizing transportation operations.

Efficiently organizing transportation of goods can be a complex problem, especially if goods are transported to a large number of locations. In a similar problem, the traveling salesman problem (TSP), a salesman is visiting N cities on a business trip and wants to find the shortest, or cheapest, route that goes through each of the N cities. Finding the shortest route can be an easy problem if a few cities are involved in the trip; as the number N of the cities increases, however, the problem becomes exponentially harder, that is, typical times for finding a solution grows faster than any power of N.

Organizing transportation can be even more complex than the traveling salesman problem. For example, in the TSP, there is only one traveler, and the traveler's route is the only activity that is considered in the problem. On the other hand, transportation operations typically use multiple vehicles in order to perform a number of deliveries at different locations, and each delivery has at least one corresponding pickup location. Typically, transportation operations must also consider various types of restrictions, such as a predetermined delivery or pickup time. Furthermore, the available vehicles typically have load limitations and/or restrictions on what kinds of goods the vehicles can transport. There may also be limitations on the available routes for transportation, such as restrictions on using certain roads for some or all of the vehicles.

### SUMMARY OF THE INVENTION

The present invention provides methods and apparatus, including computer program products, for optimizing complex transportation operations that use multiple vehicles for pick-up, transport, and delivery of goods, and where the transport operations may be subject to various types of restrictions.

In general, in one aspect, the invention features methods and apparatus, including computer program products, that implement techniques for optimizing a total cost associated with transporting products on a set of vehicles. The techniques include assigning one or more orders to one or more vehicles in the set of vehicles. Each order represents one or more products. An assignment is created for one or more vehicles in the set of vehicles. The assignment defines a sequence of pickup and delivery activities for orders that are assigned to each of the one or more vehicles. One or more orders are deleted from one or more vehicles in the set of vehicles; at least one order from the one or more deleted orders is inserted into at least one vehicle in the set of vehicles; the assignment is changed for at least one vehicle in the set of vehicles; and a cost is determined for the transportation of the products on the set of vehicles. The steps of deleting one or more orders, inserting at least one order, changing the assignment, and determining a cost are repeated until an optimal cost has been determined.

The invention can be implemented to include one or more of the following features. An original departure time and an original arrival time can be assigned to each order. The assigned original departure time or original arrival time can be changed. The steps of deleting one or more orders, inserting at least one order, changing the assignment, changing the assigned departure time, and determining a cost can be repeated until an optimal cost has been determined. Assigning an original departure time and the original arrival time can include searching for an available time slot in a calendar, based on a desired start time or a desired ending time and a time required for carrying out an activity associated with the order. Searching for an available time slot can be performed while taking into account one or more of: available vehicle capacity, opening hours of delivery and pickup locations, vehicle down times. Searching for an available time slot can be based on entries in a capacity calendar. The search can be in a forward or a backward direction in the calendar.

At least one order from a set of unassigned orders can be inserted into a vehicle in the set of vehicles from which one or more orders has been deleted. A deleted order can be inserted into a same or a different vehicle from which the order has been deleted. Changing the assignment for at least one vehicle can include changing the sequence of pickup and delivery activities for orders that are assigned to each of the at least one vehicle. All orders in a first vehicle can be combined into a first representation, and all orders in a second vehicle into a second representation. All the orders assigned to the first and the second vehicle can be exchanged by exchanging the first and the second representations. One or more orders can be assigned to one or more fixed-trip vehicles having a predetermined geographic route to travel. The fixed-trip vehicles can have a predetermined schedule defining when to travel the predetermined geographical route.

Orders can be inserted into vehicles while conforming to one or more hard constraints. The hard constraints can include one or more of: incompatibilities between two order types, incompatibilities between an order type and a vehicle type, incompatibilities between a vehicle type and a location, driving capabilities, loading capacities, and fixed start or end locations.

A cost can be determined for the transportation of the products on the set of vehicles based on one or more of the following cost components: a basic cost per vehicle, a time cost per vehicle, a distance cost per vehicle, a special cost per vehicle, a load cost per vehicle, a stop cost per vehicle, and a penalty cost for violating one or more soft constraints per vehicle. The soft constraints can include one or more of the following: delivery or pick up of orders earlier than scheduled, delivery or pick up of orders later than scheduled, and no delivery or pick up of orders.

The invention can be implemented to realize one or more of the following advantages. By using optimization techniques in accordance with to the invention, complex transportation operations can be optimized in a quick and efficient way. The transportation operations can include multiple vehicles for carrying out a large number of deliveries. The optimization techniques can minimize the cost of the transportation operations. The techniques can minimize cost while taking into account restrictions on pickups and deliveries, as well as road availability and limitations due to the vehicles' transport properties. For each vehicle, the optimization technique can include an arbitrary number of vehicle limitations, such as maximum weight, volume, or pallets for loads, and maximum duration, distance, or intermediate stops for traveling. Each vehicle can have a break calendar with multiple time windows to describe time periods when the vehicle cannot be used. The optimization techniques can be used to model that some vehicles cannot deliver certain goods or go to certain locations. Each vehicle can be assigned to a travel space to characterize locations and routes that are available for the vehicle, and corresponding distances, travel costs, or limitations. Transportation with fixed-trip vehicles, such as trains or ships, can also be optimized. The optimization techniques can ensure that incompatible goods are not transported in the same vehicle. The optimization techniques can provide a detailed assignment for each vehicle. The assignment can include schedules that take into account time windows and capacitive resources for pickups and deliveries separately.

The details of one or more implementations of the invention are set forth in the accompanying drawings and the description below. Further features, aspects, and advantages of the invention will become apparent from the description, the drawings, and the claims.

### BRIEF DESCRIPTION OF THE DRAWINGS

FIG. 1 is a schematic diagram illustrating an exemplary problem when organizing transportation operations.
FIG. 2 is a schematic diagram showing a system for optimizing transportation operations.
FIG. 3A and 3B are schematic diagrams illustrating contributions to a cost function.
FIG. 4, 5A, 5B, 6A, and 6B are flow diagrams showing methods for optimizing transportation operations.

Like reference numbers and designations in the various drawings indicate like elements.

### DETAILED DESCRIPTION

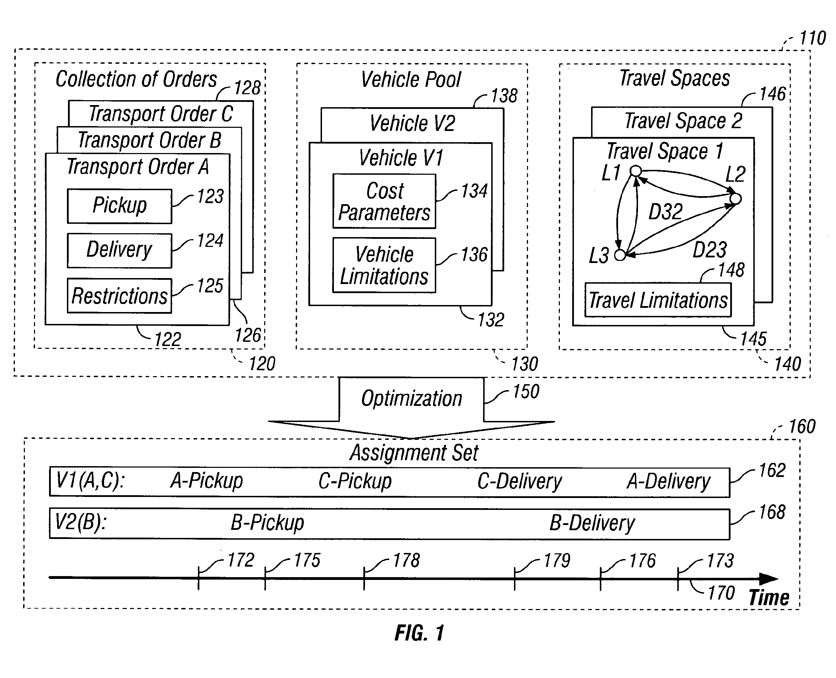

FIG. 1 illustrates an exemplary transportation organization problem. Transport operations can be organized based on an input set 110. The input set 110 specifies a collection of transport orders 120, a vehicle pool 130, and travel spaces 140. The collection 120 includes transport orders to be executed by the vehicles in the pool 130. Each transport order in the collection 120 includes instructions for transporting goods between different locations. Travel dimensions between the different locations are characterized for different vehicle types in the travel spaces 140.

Based on the input set 110, an optimization technique 150 generates an optimal assignment set 160 that includes an assignment for each of the vehicles in the pool 130. Each assignment identifies one or more transport orders and specifies a schedule for transport activities, such as pickups and deliveries, corresponding to the identified transport orders. For the scheduled transport activities, a total cost can be obtained by using the characteristics of the vehicles in the pool 130, the corresponding travel spaces 140, and other sources of costs. The optimal assignment set 160 organizes transport activities to execute the transport orders in the collection such that the total cost of the activities be minimal while certain constraints and restrictions are satisfied.

In the example shown in FIG. 1, the collection of transport orders 120 includes three transport orders, a transport order A (122), B (126), and C (128). Each transport order specifies pickup activities 123 and delivery activities 124 to be carried out by a single vehicle. The pickup activities 123 identify goods to be transported and one or more pickup locations, such as factories or warehouses, where the goods can be picked up by the vehicle. Each pickup location can have a capacity calendar (not shown) that describes capacity for providing goods at the pickup location as a function of time. For example, the capacity calendar can specify time windows corresponding to the open hours at the pickup location, such as a storehouse. The capacity calendar can also characterize capacity limits at the pickup location, for example, number of docks, parking places, or machines and workers available for loading.

The delivery activities 124 identify goods to be delivered to one or more delivery locations. Similar to a pickup location, each delivery location can have a capacity calendar describing capacity for receiving goods at the delivery location as a function of time. If a location has both pickup and delivery activities, the capacity calendar for pickup and delivery can be different. For consistency in a transport order, only previously picked up goods can be identified for delivery, and if the delivery activities include more than one delivery location, the total of the delivered goods needs to be covered by previous pickups.

In one implementation, each transport order in the collection 120 is a basic transport order that specifies only one pickup location and one delivery location. Multiple basic transport orders can be combined to represent more complex transport orders. For example, a transport order with multiple delivery locations can be split into multiple basic transport orders, each basic transport order corresponding to one of the multiple delivery locations. Similarly, a transport order with multiple pickup locations can be split into multiple basic transport orders, each basic transport order corresponding to one of the multiple pickup locations. Using basic transport orders can provide a great flexibility. For example, while the original transport order can be carried out only by a single vehicle, after the splitting, the basic transport orders may end up at more than one vehicle. Furthermore, basic transport orders provide a simple way to maintain consistency in an order: the same goods are delivered and picked up.

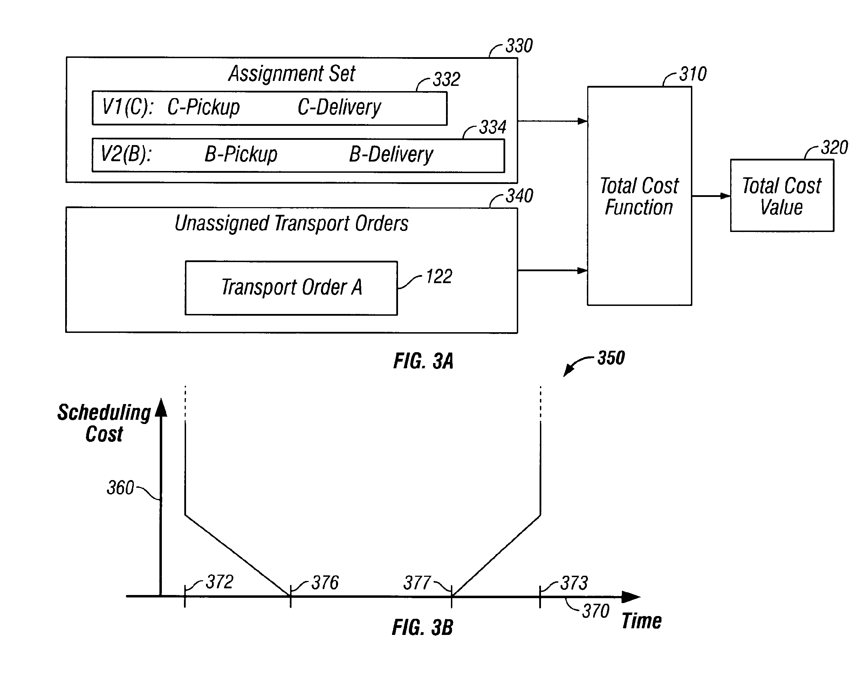

Optionally, the transport order can specify transport restrictions 125. Transport restrictions 125 can include limitations on the transported goods and on the schedules of the pickup and delivery activities. For example, the transported goods can be limited to a single transport group specifying goods that can be transported together on a vehicle. Furthermore, the transport restrictions 125 can specify an earliest date or a due date for transport activities, such as pickup, delivery, or both. The earliest date can specify a preferred time after which the activity should take place, and the due date can specify a preferred time before which the activity should be completed. Alternatively, or in addition, a release time or a deadline can impose so-called hard constraints on the pickup or delivery schedule. An exemplary implementation of such restrictions will be discussed below with reference to FIG. 3B.

The vehicle pool 130 includes vehicle records that identify vehicles that are available to carry out the transport operations specified by the transport orders in the collection 120. In the example shown in FIG. 1, the vehicle pool 130 includes a first record 132 for a vehicle V1 and a second record 138 for vehicle V2. For each vehicle in the pool, the corresponding record specifies cost parameters 134 and vehicle limitations 136.

The cost parameters 134 can describe different costs for using the vehicle for transportation. In one implementation, one or more of the following costs can be applied:
- a basic cost if the vehicle performs at least one transport activity;
- a time cost for each unit time during which the vehicle is used;
- a distance cost for each unit distance traveled by the vehicle;
- a special cost to describe additional costs for using the vehicle;
- a load cost, for each unit distance and unit weight of the goods transported with the vehicle; and
- a stop cost, for each intermediate stop along the vehicle's route.
In alternative implementations, a variety of other costs can be implemented by the cost parameters 134, for example, costs for loading and unloading, or costs caused by idle times, such as waiting for opening of a warehouse.

The vehicle limitations 136 can specify restrictions on using a vehicle for transportation. For example, the vehicle can be used on a limited route or schedule. Examples of such vehicles include fixed-trip vehicles, such as trains or ships, that operate on predefined routes according to strict schedules. Alternatively, such vehicles can be large trucks that cannot travel but on certain roads. Each vehicle can have a break calendar (not shown) describing multiple break periods when the vehicle is not available, for example, during nights or weekends, or because of maintenance. The vehicle can be assigned to a predefined start and/or end location. The vehicle may be available after a predefined start time and/or until a predefined end time. The vehicle can have driving limits specifying a maximum time, distance, or intermediate stops for a single trip.

The vehicle limitations 136 can further include loading capacities, that is, limitations on the amount of goods that can be loaded into a vehicle. The loading capacities can include weight, volume, or pallet limitations, or any other limitations in arbitrary dimensions and units. The vehicle limitations 136 can also include restrictions on the types of goods the vehicle can transport. A fixed-trip vehicle can have a loading capacity calendar that characterizes the loading capacity as a function of the time. For example, a train or a ship can have different restrictions on the loading capacity at different locations or at different times.

The travel spaces 140 characterize travel dimensions between different source and destination locations. For each vehicle in the vehicle pool 130, a corresponding travel space is specified from the travel spaces 140. For example, the vehicles in the pool 130 can be grouped into different vehicle types, for example according to vehicle size, typical pickup or delivery locations. For each vehicle type, a travel space can describe available roads and locations, or common traveling properties, such as typical speed. Optionally, each vehicle can use its own travel space, or all vehicles can use a single travel space. In the example of FIG. 1, the travel spaces 140 include a first travel space 145 and a second travel space 146. In the example, the first travel space 145 is specified for both vehicles V1 and V2 in the pool 130.

The travel space 145 includes locations L1, L2, and L3 and corresponding travel dimensions between them. A travel dimension can characterize a distance, a duration, or a combination of distance and duration between two locations for a vehicle type. The travel dimensions can be used to schedule transport activities and can be combined with cost parameters of vehicles to characterize costs for transporting goods between the corresponding locations. Optionally, travel dimensions can take into account additional costs due to, for example, a number of stops, toll roads, or road conditions. As shown in FIG. 1, a travel dimension can depend on the travel direction between two locations. For example, between the locations L2 and L3, traveling from L2 to L3 corresponds to a travel dimension D23 that can be different than the travel dimension D32 corresponding to traveling from L3 to L2.

In one implementation, the travel space 145 specifies multiple travel lanes that correspond to alternative routes between two locations. Between the two locations, a travel dimension can be identified by selecting one of the multiple travel lanes. For example, the travel dimension can be identified as a length of a shortest travel lane. The shortest travel lane can be selected based on distance, duration, or other costs, such as road tolls, for the transportation.

The travel space 145 can include travel limitations 148. Travel limitations 148 can include restrictions on visiting certain locations or using certain roads with certain types of vehicles. For example, a travel limitation can specify a maximum vehicle weight for a road, or exclude vehicles above a size limit from going to a location. Optionally, some travel limitations can be represented by travel dimensions. For example, a travel lane can be closed between two locations by assigning an infinite travel dimension, such as infinite travel duration, to the lane.

An optimal assignment set 160 including one assignment for each vehicle in the pool 130 can be generated from the above elements of the input set 110. In the example shown in FIG. 1, the optimal assignment set includes a first assignment 162 for the vehicle V1, and a second assignment 168 for the vehicle V2. For each vehicle, the corresponding assignment can identify transport orders in the collection 120. The first assignment 162 identifies transport orders A (122) and C (128) for vehicle V1, and the second assignment 164 identifies transport order B for vehicle V2. Alternatively, depending on the input set 110, the optimal assignment set may identify no transport order at all for one or more assignments corresponding to vehicles in the pool 130.

Each assignment specifies a sequence of the pickup and delivery activities of the identified transport orders. Furthermore, each pickup and delivery can have a scheduled starting time. In FIG.1, the scheduled starting times are shown on a schematic time line 170. According to the first assignment, vehicle V1 first picks up goods specified in transport order A at time 172 and delivers those goods last, at time 173. After the first pickup, vehicle V1 performs a second pickup according to transport order C at time 178, and delivers those at time 179. Similarly, according to the second assignment 168, vehicle V2 picks up goods at time 175, and delivers those at time 176.

The route of each vehicle is implicitly given by the sequence of pickups and delivery activities. Each pickup or delivery has a corresponding location, and the travel spaces 140 specify the route between these locations. The route of the vehicle can be constructed as the route connecting locations of subsequent activities. For example, vehicle V 1 first travels from a start location, which is typically a home depot, to the pickup location specified in transport order A, then to the pickup location in transport order C, then to the delivery location in transport order C and to the delivery location in transport order A, and finally to an end location, which is typically, but not necessary, the same home depot.

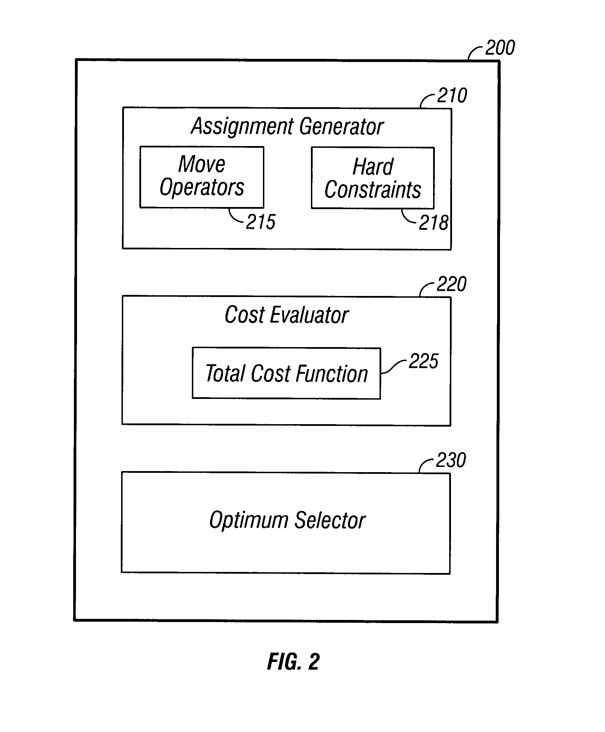

FIG. 2 shows a system 200 for organizing transport operations. The system 200 can generate an optimal assignment set for a pool of vehicles according to a collection of transport orders. For example, the system 200 can perform the optimization 150 shown in FIG. 1 to generate the optimal assignment set 160 for the vehicle pool 130 according to the collection of transport orders 120.

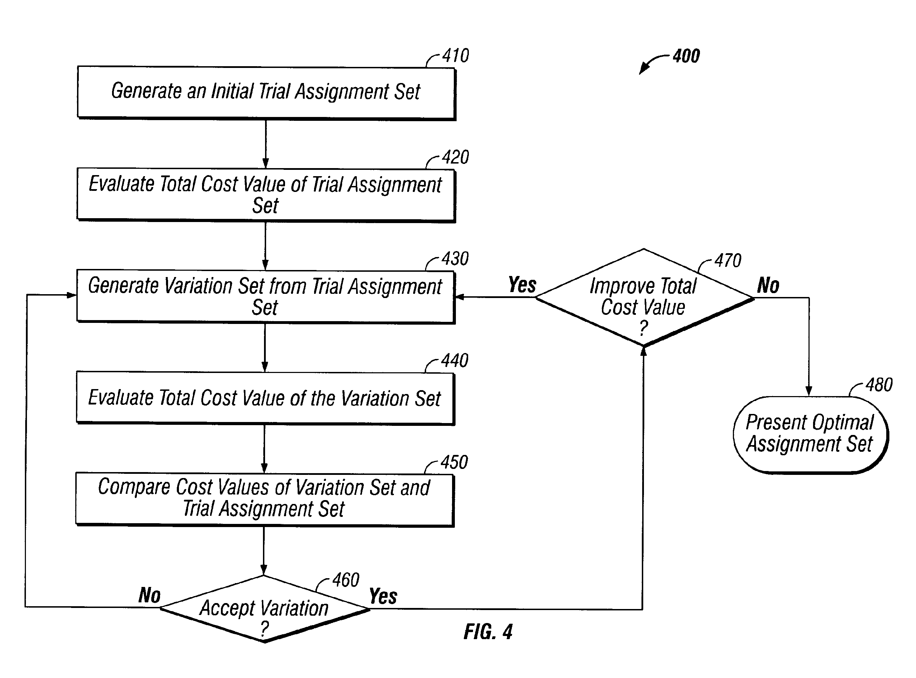

The system 200 includes an assignment generator 210, a cost evaluator 220, and an optimum selector 230. The assignment generator 210 generates assignment sets. The cost evaluator 220 associates a total cost value to the generated assignment sets. Based on the associated total cost value, the optimum selector 230 chooses an optimal assignment set from the generated sets. For example, the optimum selector can chose the assignment set with a smallest total cost value. Selecting optimal assignment sets will be discussed in detail below with reference to FIG. 4.

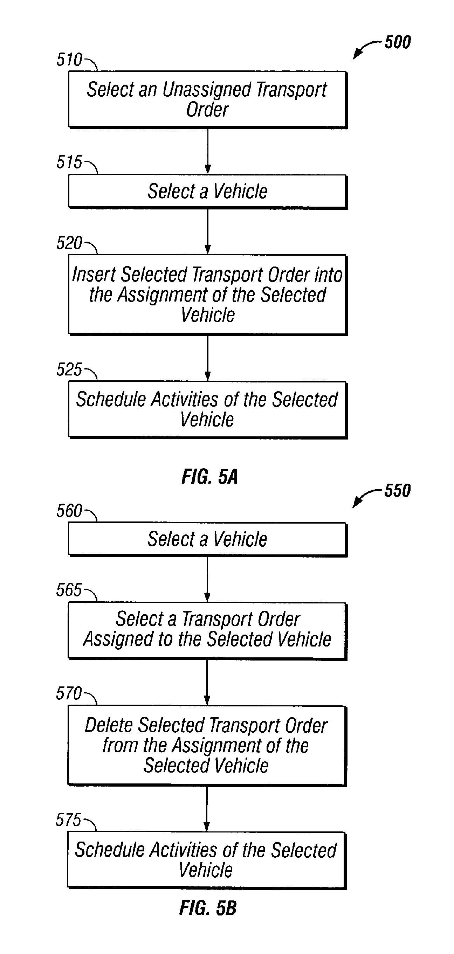

The assignment generator 210 includes move operators 215 for altering one or more assignments in an assignment set. As will be discussed in more detail with reference to FIGS. 5A-6B, the move operators 215 can insert or delete transport orders from assignments, or change a sequence or schedule of activities within an assignment. The assignment generator also specifies hard constraints 218, that is, requirements that are strictly enforced in the optimal solution.

In one implementation, the assignment generator generates assignments that do not violate any of the hard constraints 218. The hard constraints 218 can be selected from the transport restrictions 125 (FIG. 1), the vehicle limitations 136 (FIG. 1), or the travel limitations 148 (FIG. 1). Alternatively, or in addition, hard constraints can be formulated independently of the restrictions and limitations included in the input set 110 (FIG. 1). For example, hard constraints can require that each of the transport orders in the collection be assigned to a specific vehicle. A hard constraint can also implement a user's preferences during optimization; for example, that a particular transport order can only be assigned to a particular vehicle, or selected pickup or delivery activities have predefined starting times. In alternative implementations, some hard constraints can be violated during optimization, but enforced in the optimal solution.

In one implementation, the following hard constraints 218 are enforced during optimization:
- no incompatibilities between transport groups, that is, the same vehicle cannot transport goods in certain transport groups together with goods selected from other transport groups;
- no incompatibilities between transport groups and vehicle types, that is, goods in certain transport groups can be transported only by certain types of vehicles;
- no incompatibilities between vehicle types and locations, that is, certain vehicle types are not allowed to travel to a particular location;
- limits on driving capabilities, that is, certain vehicles cannot travel more than a predetermined distance or duration limit, or can have a maximum number of intermediate stops;
- if defined, start and/or end location for a vehicle are respected; and
- limits on loading capacities of vehicles.

The generated assignment sets can be evaluated by the cost evaluator 220. In one implementation, the cost evaluator 220 uses a total cost function 225, to characterize an assignment set. The total cost function 225 associates a total cost value with the evaluated assignment set. The total cost value can include actual costs representing the transportation activities of vehicles, but also penalty cost contributions from soft constraints, that is, requirements that are not strictly enforced, that are violated. A soft constraint, and corresponding penalties, can represent an actual cost of violating the soft constraint, but can also implement preferences of a user. Examples of soft and hard constraints are discussed below with reference to FIG. 3B.

As shown in FIG. 3A, a total cost function 310 can calculate a total cost value 320 to evaluate an assignment set 330. The total cost value 320 can be a sum of multiple contributions. As discussed below, the total cost function 310 can include contributions from transportation and scheduling costs calculated from the assignment set. In addition, the total cost function can add a cost for each unassigned transport order 340, such as transport order A (122) in the example shown in FIG. 3A.

In one implementation, each unassigned transport order can increase the total cost value 320 by a predetermined unassigned cost. The predetermined cost can be the same, that is, uniform, for all unassigned transport orders. Using a uniform unassigned cost can provide a soft constraint that prefers each transport order in the collection to be assigned to a vehicle in the vehicle pool. Alternatively, a different unassigned cost can be applied to different transport orders to provide selective soft constraints. In one implementation, different unassigned costs reflect actual costs that a third party would charge to perform the transport orders.

The total cost function 310 can calculate transportation costs for the assignment set 330 by using information in the input set 110 (FIG. 1). The assignment set 330 includes a first assignment 332 that identifies the transport order C (128, FIG. 1) for vehicle V1, and a second assignment 334 that identifies the transport order B (126, FIG. 1) for vehicle V2. Based on the sequence of pickup and delivery activities in the assignments C and B, a route can be determined for each of the vehicles V1 and V2, respectively. By using the determined route, the travel dimensions in the travel space 145 (FIG. 1), the transport orders C and B, and the vehicle records of vehicles V1 and V2, the total cost function can calculate transportation costs.

For example, according to the assignment 332, vehicle V1 first travels from a start location to a source location to pick up goods; from the source location to the destination location to deliver the goods; and from the destination location to an end location. The starting and end locations are identified in the vehicle limitations, and the source and destination locations in the transport order C. From these locations, the corresponding travel dimensions can be obtained from the travel space 145 specified for the vehicle. Characteristics of the transported goods, such as load dimensions, can be obtained from the travel order C as well. Given the travel dimensions and the load dimensions, the transportation cost can be calculated based on the cost parameters of vehicle V1.

As shown in FIG. 3B, the total cost function 310 can include scheduling cost for the assignment set 330. In one implementation, a scheduling cost function 350 specifies scheduling cost values 360 as a function of time 370. The scheduling cost function 350 can be used to implement transport restrictions 125 (FIG. 1) such as earliest dates and due dates, or release times and deadlines for pickups and deliveries.

In one implementation, the scheduling function 350 can be used to schedule a due date 377, which is a soft constraint, and a deadline 373, which is a hard constraint, for a starting time of a pickup or a delivery. Between the due date 377 and the deadline 373, the scheduling cost increases linearly. Alternatively, the scheduling cost increase can be nonlinear, and described by a general monotonic function. The cost increase can reflect actual costs for delay, but can also correspond to a preference, for example, to provide a "scheduling cushion" against unexpected events near the deadline 373. After the deadline 373, the scheduling cost becomes infinite to reflect that the deadline 373 is a hard constraint.

Similarly, the scheduling function 350 can be used to schedule an earliest date 376, which is a soft constraint, and a release time 372, which is a hard constraint. In alternative implementations, the scheduling function can be any function, for example, a monotonic nonlinear function that diverges at times corresponding to hard constraints, such as a deadline or a release date.

As shown in FIG. 4, an optimization method 400 can find an optimal assignment set, such as the optimal assignment set 160, to schedule transport orders 120 for a vehicle pool 130 (see FIG. 1). The optimization method 400 can be performed, for example, by the system 200 (FIG. 2), and can use a total cost function 310 (FIG. 3) for the optimization.

The optimization method 400 starts by generating an initial trial assignment set for the vehicle pool (step 410). In one implementation, the initial trial assignment set includes assignments without any transport orders, that is, an empty assignment set. Alternatively, the initial trial assignment set can be a previously optimized set that requires further optimization, for example, because of changes in the input set 110. Furthermore, the initial trial assignment set can be a random set, for example, generated by the assignment generator 210 (FIG. 2). The initial trial assignment set is evaluated, for example, by the cost evaluator 220 (FIG. 2) to provide a total cost value (step 420). In one implementation, multiple assignment sets are generated, and the initial trial assignment set is selected from the generated assignment sets based on their total cost values.

A variation set is generated from the trial assignment set (step 430). The variation set includes assignments for the same vehicle pool 130, but at least one vehicle has a different assignment in the variation set than in the trial assignment set. The difference in the assignment can include different transport orders, different sequence, or different scheduling. A difference in the transportation order can affect sequence and scheduling, and a difference in the sequence can affect scheduling.

The variation set can be generated, for example, by applying one or more of the move operators 215 of the assignment generator 210 (FIG. 2). The move operators can include insert operators, delete operators, routing operators, and scheduling operators. An insert or delete operator can insert or delete a transport order into or from an assignment, respectively; a routing operator does not change the transport orders in an assignment, only rearranges the sequence of activities; a scheduling operator changes starting times of activities without altering their sequence.

Subsequent move operators can be grouped into delete and insert phases. A delete phase starts with a delete operator that can be followed by a combination of routing, scheduling, and further delete operators. After applying the delete phase, an assignment set has fewer transportation orders. The insert phase starts with an insert operator that can be followed by a combination of routing, scheduling, and further insert operators. After applying the insert phase, the number of transport orders in the assignment set increases.

Optionally, the variation set can be generated by applying a vehicle exchange operator. The vehicle exchange operator combines all orders in a first vehicle into a first representation, and all orders in a second vehicle into a second representation. The vehicle exchange operator exchanges all the orders assigned to the first and the second vehicle by exchanging the first and the second representations. The vehicle exchange operator can be used, for example, to minimize traveling from a starting or to an end location.

In one implementation, the generated variation set satisfies each of the hard constraints 218 specified by the assignment generator 210. For example, each move operator 215 can generate variations that satisfy the hard constraints 218. The move operators are further discussed below with reference to FIG. 5A - FIG. 6B.

The total cost value of the variation set is evaluated (step 440) and compared to the total cost value of the trial assignment set (step 450). Based on the result of the comparison, a decision 460 is made: accept the variation set as a new trial assignment set, or not? For example, if the variation set does not improve on the total cost value, the variation set is refused ("No" branch of decision 460), and the method returns to generating a new variation set from the trial assignment set (return to step 430). If the variation set does improve on the total cost value, the variation set is accepted ("Yes" branch of decision 460), that is, the trial assignment set is replaced with the variation set.

Optionally, the decision 460 can accept a variation set, even if the variation set does not improve the total cost value, for example, when a variation set includes fewer transport orders than the trial assignment set. Alternatively, or in addition, the decision 460 can use a probability to accept a variation set, where the probability depends on the difference between the total cost values of the variation set and the trial assignment set. In one implementation, the probability can be described as an artificial temperature (simulated annealing).

If, after accepting the variation, further improvement is required on the total cost value ("Yes" branch of decision 470), the method returns to generate a new variation set (step 430). The decision 470 can be based, for example, on user input, a target total cost value, or a time period for the optimization. If no more improvement is required ("No" branch of decision 470), the trial assignment set is presented as the optimal assignment set (step 480). Optionally, the method 400 can be stopped at any time, and the trial assignment can be presented as an optimal assignment set.

In one implementation, the optimization method 400 is performed for a population of trial assignment sets. In this implementation, the presented optimal assignment set can be selected as the best trial assignment set in the population. Optionally, the population can be periodically renewed by offspring generated from two or more trial assignment sets, also called "parents". An offspring is a new trial assignment set that includes assignments from its parents. For example, an offspring can "inherit" the best assignments from its parents. Optionally, the offspring can replace one or more of the parents in the population.

FIG. 5A - FIG. 6B show methods performed by move operators, such as the move operators 215 (FIG.2), to generate or alter assignment sets that include assignments for a vehicle pool. These move operators can be applied to generate an optimal assignment set, as discussed above with reference to FIG. 4. The move operators can be applied in any order or combination to one or more assignments in an assignment set. The move operators can satisfy hard constraints (for example, hard constraints 218, FIG.2). For example, if any of the move operators performs a step that cannot satisfy a hard constraint, the move operator does not implement any change in the assignment.

FIG. 5A and FIG. 5B show an inserting method 500 and a deleting method 550 that can be performed by an insert operator and a delete operator, respectively. The insert operator inserts an unassigned transport order into an assignment, and the delete operator deletes a transport order from an assignment. By using combinations of the insert and delete operations, transport orders can be assigned in all possible combinations to vehicles in a vehicle pool. For example, a transport order can be moved from a first vehicle to a second vehicle by deleting the transport order from the assignment of the first vehicle and subsequently inserting the same transport order into the assignment of the second vehicle.

According to the method 500, the insert operator selects an unassigned transport order (step 510) and a vehicle in the vehicle pool (step 515). The selected transport order is inserted into an assignment of the selected vehicle (step 520).

The selected transport order includes a pickup and a delivery activity, so both of these activities need to be inserted in the sequence and schedule of activities in the assignment of the selected vehicle. After inserting the transport order, the pickup activity has to precede the delivery activity. In one implementation, the pickup activity is inserted at a random position in the sequence of activities, and the delivery activity is inserted at another random position after the pickup activity.

The activities of the selected vehicle are scheduled (step 525). In one implementation, the inserted delivery activity is scheduled such that its due date is met, and the remaining activities in the sequence are scheduled both forward and backward from the delivery activity. For example, an unassigned transport order D is inserted into an assignment specifying transport orders A, B, and C for the selected vehicle in a sequence
(A-pickup, B-pickup, C-pickup, A-delivery, B-delivery, C-delivery). To insert the transport order D, the corresponding D-pickup is inserted after C-pickup and the D-delivery after B-delivery, that is, the sequence becomes
(A-pickup, B-pickup, C-pickup, D-pickup, A-delivery, B-delivery, D-delivery, C-delivery).
To perform the scheduling step, D-delivery is scheduled to avoid earliness or lateness costs. Next, activities after and before D-delivery are scheduled. After D-delivery, only C-delivery is scheduled. Before D-delivery, activities are scheduled one-by-one in backward direction, that is, first B-delivery is scheduled, then A-delivery, then D-pickup, then C-pickup, then B-pickup, and finally A-pickup.

In an alternative implementation, the schedule remains unchanged before the inserted pickup activity, and all other activities (including the inserted pickup and delivery activities) are scheduled forward from the position just before the pickup activity.

According to the method 550, the delete operator selects a vehicle in the vehicle pool (step 560), and a transport order assigned to the selected vehicle (step 565). In one implementation, a transport order is selected randomly from the assignment of the selected vehicle. Alternatively, a transport order can be selected based on the starting times, for example, late or early order, or based on the cost to carry out the transport order. Optionally, more than one transport order can be selected, for example, transport orders that form a block of consecutive activities.

The selected transport order, including both pickup and delivery activities, is deleted from the assignment of the selected vehicle (step 570). The activities of the selected vehicle are scheduled to minimize idle time in the schedule after removing the selected transport order (step 575). The deleted transport order becomes unassigned, and can be inserted, for example, by a later insert operation.

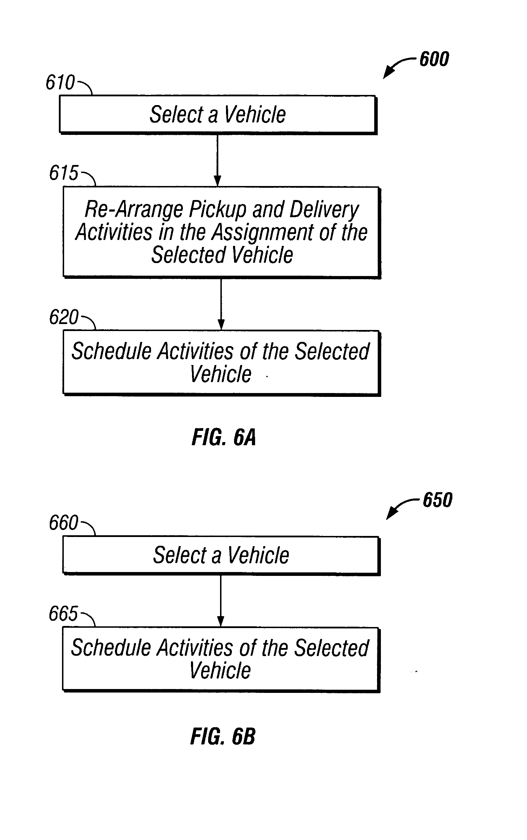

FIG. 6A and FIG. 6B show a routing method 600 and a scheduling method 650 that can be performed by a routing operator and a scheduling operator (i.e., move operators 215 of FIG. 2), respectively. The routing and scheduling operators do not add or remove transport orders from an assignment, but change the sequence and the schedule, respectively, of activities in the assignment.

According to the method 600, the routing operator selects a vehicle in the vehicle pool (step 610). In one implementation, the routing operator selects a vehicle whose assignment has recently changed, for example, a transport order has been inserted or deleted from the assignment. Alternatively, the routing operator can select a vehicle randomly.

The routing operator re-arranges pickup and delivery activities in the assignment of the selected vehicle (step 615). As a result of the change in the sequence of activities, the selected vehicle will travel on a different route according to the assignment. Activities can be rearranged, for example, by standard methods used for the traveling salesman problem. Standard methods include inverting a subsequence, moving a subsequence to a different position in the sequence, or swapping two subsequences. If necessary, pickup and delivery activities of the same transport order can be exchanged to ensure that pickup precedes delivery. Finally, the routing operator can schedule the activities in the assignment (step 620).

According to the method 650, the scheduling operator selects a vehicle (step 660) and schedules activities in the assignment of the selected vehicle (step 665). To schedule the activities, the scheduling operator can use information in the vehicle limitations 136 and in the travel space 145 (FIG. 1) specified for the vehicle. The scheduling operator does not change the sequence of activities in the assignment, but only the schedule, for example, starting times, of the activities. Activities can be re-scheduled to minimize waiting times of a vehicle. Alternatively, a new starting time can be determined for an early or late activity, and the remaining activities can be rescheduled forward and backward from the early or late activity.

For example, the selected vehicle has an assignment identifying transport orders A and B, and specifying the sequence of activities (A-pickup, B-pickup, B-delivery, A-delivery) with corresponding starting times (t1, t2, t3, t4). If B-delivery is too early and A-delivery is on time, then B-delivery can be selected as an "anchor" activity. If a starting time t5 neither causes earliness nor lateness cost for B-delivery, time t5 can be chosen as a starting time for B-delivery. The remaining subsequence after B-delivery, that is, A-delivery, can be scheduled forward, providing a new starting time t6 for A-delivery. The subsequence before B-delivery can be scheduled in backward direction as follows: B-pickup can have a starting time t7, and A-pickup can have the starting time t8.

The invention can be implemented in digital electronic circuitry, or in computer hardware, firmware, software, or in combinations of them. The invention can be implemented as a computer program product, that is, a computer program tangibly embodied in an information carrier, for example, in a machine-readable storage device or in a propagated signal, for execution by, or to control the operation of, data processing apparatus, for example, a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, or optical disks. Information carriers suitable for embodying computer program instructions and data include all forms of non-volatile memory, including by way of example semiconductor memory devices, for example, EPROM, EEPROM, and flash memory devices; magnetic disks, for example, internal hard disks or removable disks; magneto-optical disks; and CD-ROM and DVD-ROM disks. The processor and the memory can be supplemented by, or incorporated in special purpose logic circuitry.

The invention has been described in terms of particular embodiments. Other embodiments are within the scope of the following claims. For example, the steps of the invention can be performed in a different order and still achieve desirable results.

## Claims

1. A computer program product, tangibly stored on a computer-readable medium, for optimizing a total cost associated with transporting products on a set of vehicles, comprising instructions operable to cause a programmable processor to:
assign one or more orders to one or more vehicles in a set of vehicles, each order representing one or more products;
create an assignment for one or more vehicles in the set of vehicles, the assignment defining a sequence of pickup and delivery activities for orders that are assigned to each of the one or more vehicles;
delete one or more orders from one or more vehicles in the set of vehicles;
insert at least one order from the one or more deleted orders into at least one vehicle in the set of vehicles;
change the assignment for at least one vehicle in the set of vehicles;
determine a cost for the transportation of the products on the set of vehicles; and
repeat the instructions to delete one or more orders, insert at least one order, change the assignment, and determine a cost, until an optimal cost has been determined.

2. The computer program product of claim 1, further comprising instructions to:
assign an original departure time and an original arrival time to each order;
change the assigned original departure time or original arrival time for at least one order; and
repeat the instructions to delete one or more orders, insert at least one order, change the assignment, change the assigned departure time and determine a cost, until an optimal cost has been determined.

3. The computer program product of claim 2, wherein the instructions to assign an original departure time and the original arrival time comprise instructions to:
search for an available time slot in a calendar, based on a desired start time or a desired ending time and a time required for carrying out an activity associated with the order.

4. The computer program product of claim 3, wherein the instructions to search for an available time slot comprise instructions to:
search for an available time slot while taking into account one or more of: available vehicle capacity, opening hours of delivery and pickup locations, vehicle down times.

5. The computer program product of claim 4, further comprising instructions to:
search for an available time slot based on entries in a capacity calendar.

6. The computer program product of claim 3, wherein the instructions to search comprise instructions to:
search in a forward direction in the calendar.

7. The computer program product of claim 3, wherein the instructions to search comprise instructions to:
search in a backward direction in the calendar.

8. The computer program product of claim 1, further comprising instructions to:
insert at least one order from a set of unassigned orders into a vehicle in the set of vehicles from which one or more orders has been deleted.

9. The computer program product of claim 1, wherein the instructions to insert comprise instructions to:
insert at least one order from the one or more deleted orders into a same vehicle from which the at least one order has been deleted.

10. The computer program product of claim 1, wherein the instructions to insert comprise instructions to:
insert at least one order from the one or more deleted orders into a vehicle different from a vehicle from which the at least one order has been deleted.

11. The computer program product of claim 1, wherein the instructions to change the assignment for at least one vehicle comprises instructions to:
change the sequence of pickup and delivery activities for orders that are assigned to each of the at least one vehicle.

12. The computer program product of claim 1, further comprising instructions to:
combine all orders in a first vehicle into a first representation;
combine all orders in a second vehicle into a second representation; and
exchange all the orders assigned to the first and the second vehicle by exchanging the first and the second representations.

13. The computer program product of claim 1, wherein the instructions to assign include instructions to:
assign one or more orders to one or more fixed-trip vehicles having a predetermined geographic route to travel.

14. The computer program product of claim 13, wherein the instructions to assign one or more orders to one or more fixed-trip vehicles include instructions to:
assign one or more orders to one or more fixed-trip vehicles having a predetermined schedule defining when to travel the predetermined geographical route.

15. The computer program product of claim 1, wherein the instructions to insert at least one order comprises instructions to:
insert at least one order from the one or more deleted orders into at least one vehicle in the set of vehicles while conforming to one or more hard constraints.

16. The computer program product of claim 15, wherein the hard constraints include one or more of: incompatibilities between two order types, incompatibilities between an order type and a vehicle type, incompatibilities between a vehicle type and a location, driving capabilities, loading capacities, and fixed start or end locations.

17. The computer program product of claim 1, wherein the instructions to determine a cost comprise instructions to:
determine a cost for the transportation of the products on the set of vehicles based on one or more of the following cost components: a basic cost per vehicle, a time cost per vehicle, a distance cost per vehicle, a special cost per vehicle, a load cost per vehicle, a stop cost per vehicle, and a penalty cost for violating one or more soft constraints per vehicle.

18. The computer program product of claim 17, wherein the soft constraints include one or more of the following: delivery or pick up of orders earlier than scheduled, delivery or pick up of orders later than scheduled, and no delivery or pick up of orders.

19. A method for optimizing a total cost associated with transporting products on a set of vehicles, the method comprising:
assigning one or more orders to one or more vehicles in a set of vehicles, each order representing one or more products;
creating an assignment for one or more vehicles in the set of vehicles, the assignment defining a sequence of pickup and delivery activities for orders that are assigned to each of the one or more vehicles;
deleting one or more orders from one or more vehicles in the set of vehicles;
inserting at least one order from the one or more deleted orders into at least one vehicle in the set of vehicles;
changing the assignment for at least one vehicle in the set of vehicles;
determining a cost for the transportation of the products on the set of vehicles; and
repeating the steps of deleting one or more orders, inserting at least one order, changing the assignment, and determining a cost, until an optimal cost has been determined.

20. The method of claim 19, further comprising:
assigning an original departure time and an original arrival time to each order;
changing the assigned original departure time or original arrival time for at least one order; and
repeating the steps of deleting one or more orders, inserting at least one order, changing the assignment, changing the assigned departure time, and determining a cost, until an optimal cost has been determined.

21. The method of claim 20, wherein assigning an original departure time and the original arrival time comprises:
searching for an available time slot in a calendar, based on a desired start time or a desired ending time and a time required for carrying out an activity associated with the order.

22. The method of claim 21, wherein searching for an available time slot comprises:
searching for an available time slot while taking into account one or more of: available vehicle capacity, opening hours of delivery and pickup locations, vehicle down times.

23. The method of claim 22, further comprising:
searching for an available time slot based on entries in a capacity calendar.

24. The method of claim 21, wherein searching comprises:
searching in a forward direction in the calendar.

25. The method of claim 21, wherein searching comprises:
searching in a backward direction in the calendar.

26. The method of claim 19, further comprising:
inserting at least one order from a set of unassigned orders into a vehicle in the set of vehicles from which one or more orders has been deleted.

27. The method of claim 19, wherein inserting comprises:
inserting at least one order from the one or more deleted orders into a same vehicle from which the at least one order was deleted.

28. The method of claim 19, wherein inserting comprises:
inserting at least one order from the one or more deleted orders into a vehicle different from a vehicle from which the at least one order was deleted.

29. The method of claim 19, wherein changing the assignment for at least one vehicle comprises:
changing the sequence of pickup and delivery activities for orders that are assigned to each of the at least one vehicle.

30. The method of claim 19, further comprising:
combining all orders in a first vehicle into a first representation;
combining all orders in a second vehicle into a second representation; and
exchanging all the orders assigned to the first and the second vehicle by exchanging the first and the second representations.

31. The method of claim 19, wherein assigning comprises:
assigning one or more orders to one or more fixed-trip vehicles having a predetermined geographic route to travel.

32. The method of claim 31, assigning one or more orders to one or more fixed-trip vehicles comprises:
assigning one or more orders to one or more fixed-trip vehicles having a predetermined schedule defining when to travel the predetermined geographical route.

33. The method of claim 19, wherein inserting at least one order comprises:
inserting at least one order from the one or more deleted orders into at least one vehicle in the set of vehicles while conforming to one or more hard constraints.

34. The method of claim 33, wherein the hard constraints include one or more of: incompatibilities between two order types, incompatibilities between an order type and a vehicle type, incompatibilities between a vehicle type and a location, driving capabilities, loading capacities, and fixed start or end locations.

35. The method of claim 19, wherein determining a cost comprises:
determining a cost for the transportation of the products on the set of vehicles based on one or more of the following cost components: a basic cost per vehicle, a time cost per vehicle, a distance cost per vehicle, a special cost per vehicle, a load cost per vehicle, a stop cost per vehicle, and a penalty cost for violating one or more soft constraints per vehicle.

36. The method of claim 35, wherein the soft constraints include one or more of the following: delivery or pick up of orders earlier than scheduled, delivery or pick up of orders later than scheduled, and no delivery or pick up of orders.
